(19)

Europäisches Patentamt

European Patent Office

Office européen des brevets

(11) **EP 4 664 745 A1**

(12) **EUROPEAN PATENT APPLICATION**

(43) Date of publication:
**17.12.2025 Bulletin 2025/51**

(21) Application number: **24181161.1**

(22) Date of filing: **10.06.2024**

(51) International Patent Classification (IPC):
***H02M 7/5387*** (2007.01)   ***H02M 1/44*** (2007.01)
***H02M 1/12*** (2006.01)

(52) Cooperative Patent Classification (CPC):
**H02M 7/53876; H02M 1/123;** H02M 1/44

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **VOLVO TRUCK CORPORATION
405 08 Göteborg (SE)**

(72) Inventors:
• WIDEK, Per
  **423 38 GÖTEBORG (SE)**
• OTTOSSON, Jonas
  **413 17 GÖTEBORG (SE)**

(74) Representative: **Kransell & Wennborg KB
P.O. Box 2096
403 12 Göteborg (SE)**

(54) **REDUCTION OF COMMON-MODE CURRENTS IN AN ELECTRIC POWER CONVERTER**

(57)    A computer system is provided, including processing circuitry configured to control a switching (800) of a plurality of switching elements of an electric power converter to synthesize an output alternating current (AC) voltage vector. For each AC phase of a plurality of AC phases (u, v, w), the converter is configured to switch the AC phase between being either connected to a first or to a second DC rail. In response to a demand for synthesizing a zero output AC voltage vector, an inter-phase delay ($d_{1-4}$) is introduced between switching of each AC phase to avoid simultaneous switching of all AC phases from the first DC rail to the second DC rail or vice versa during a same switching period, in order to reduce common mode (CM) voltage and current. A corresponding electric power converter, electric vehicle, computer-implemented method, computer program/storage medium are also provided.

Fig. 8

**EP 4 664 745 A1**

**Description**

**TECHNICAL FIELD**

The disclosure relates generally to electric power converters. In particular aspects, the disclosure relates to how to reduce common-mode currents in power converters, such as in those used in electric vehicles. The disclosure can be applied to heavy-duty vehicles, such as trucks, buses, and construction equipment, among other vehicle types. Although the disclosure may be described with respect to a particular vehicle, the disclosure is not restricted to any particular vehicle and also apply to other entities than vehicles.

**BACKGROUND**

Many contemporary power converters operate by switching a plurality of switching elements (such as insulated-gate bipolar transistors, IGBTs) in accordance with a specific control scheme, in order to for example generate alternating current (AC) power from the electrical energy stored in one or more batteries (i.e. to convert from direct current, DC, power to AC power, in which case the power converter is referred to as an electric power inverter). A three-phase inverter may for example be used for variable-frequency drive applications, and may in a simple configuration include three switch-pairs configured to convert DC to AC power as part of driving e.g. a wye-connected load (such as an AC motor), by selectively switching each phase leg in accordance with a switching sequence decided by a particular control scheme.

However, due to such switching, power converters are also known to generate common mode (CM) currents and voltages, which may act as disturbances (e.g. cause electromagnetic interference, EMI) and present challenges in meeting electromagnetic compatibility (EMC) requirements. For heavy-duty/commercial vehicles with an increasing number of different sources and loads connected to a same traction voltage system (TVS), the compliance with such EMC requirements is important in order to guarantee that the functionality and lifetime of one such component is not negatively affected by the presence of others. Known solutions for how to at least partially handle such disturbances include the use of filters (referred to as e.g. pole-chassis capacitances, Y-capacitances, filter capacitances, and similar), but their use may be limited by both cost, weight and/or volume budgets as well as by one or more standard requirements.

The present disclosure seeks to improve upon contemporary power converters and their control strategies, in particular as used in heavy-duty electric vehicles, and to at least partially reduce CM currents without the need for additional such filters.

**SUMMARY**

According to a first aspect of the present disclosure, there is provided a computer system that includes processing circuitry. The processing circuitry is configured to control a switching of a plurality of switching elements of an electric power converter to synthesize an output AC voltage vector. The power converter is configured to, by means of the switching and for each of a plurality of AC phases, switch the AC phase between being either connected to a first DC rail or to a second DC rail. The processing circuitry is configured to, as part of the control and in response to a demand for synthesizing a zero output AC voltage vector, introduce an inter-phase delay between switching of each AC phase, to avoid simultaneous switching of all AC phases from the first DC rail to the second DC rail or vice versa during a same switching period. The first aspect of the disclosure may seek to solve the problem of excessive CM currents being generated, and in particular if the power converter is used to drive an AC motor with parasitic capacitances between its coil windings and core. A technical benefit may include that by introducing the delay between switching of each AC phase, switching transients may be more spread in time, to avoid simultaneous discharging/charging of the parasitic capacitances.

Optionally in some examples, including in at least one preferred example, the processing circuitry may be configured to control the switching of the switching elements using a space vector modulation (SVM)-type control scheme, and introducing the delay to synthesize the zero output AC voltage vector may include switching from a first zero voltage vector to a second zero voltage vector via at least one intermediate active voltage vector. A technical benefit may include that contemporary such SVM-type control schemes may thus still be used, but modified in accordance with the present disclosure to introduce the delay between switching of each AC phase when there is a need to synthesize a zero output AC voltage vector.

Optionally, in some examples, including in at least one preferred example, the delay between switching of each AC phase is caused by randomly selecting an order in which each AC phase is switched. A technical benefit may include that such a solution is easy to implement, and that the randomness may avoid causing any drift of voltage over time, which could otherwise result in unwanted current drift.

Optionally, in some examples, including in at least one preferred example, the delay between switching of each AC phase may be fixed. A technical benefit may include that control

Optionally, in some examples, including in at least one preferred example, the switching of each AC phase may be ordered to generate a zero average output AC voltage vector over a plurality of switching periods. A technical benefit may include that the output (average) voltage can be controlled to zero in a more predictable way.

Optionally, in some examples, including in at least one preferred example, a total number of the AC phases may be three, e.g. such that the power converter is configured to convert between DC and three-phase AC power. A technical benefit may include that three-phase AC power is often used to run e.g. various electric machines (such as motors) and similar, and in that the envisaged solution is thus readily applicable in such situations.

Optionally, in some examples, including in at least one preferred example, the power converter may be a two-level inverter. A technical benefit may include that such an inverter topology is easier to implement.

Optionally, in some examples, including in at least one preferred example, the power converter may be used to provide AC power to an AC motor, and the demand for synthesizing the zero AC output vector may follow from a speed of the AC motor being below a speed threshold. A technical benefit may include that it may thus be detected/determined when there is a natural demand for a zero AC output voltage vector, as the motor may e.g. be in "standby" or spinning without much or any resistance.

Optionally, in some examples, including in at least one preferred example, the power converter may be used to provide AC power to an AC motor, and the demand for synthesizing the zero AC output vector may follow from one or more phase currents of the AC motor being below respective one or more current thresholds. A technical benefit may include that low or little AC phase currents may indicate that the motor is in "standby", and that synthesizing of a zero output AC voltage vector is thus required.

According to a second aspect, there is provided an electric power converter for converting between DC power and AC power. The power converter includes a plurality of switching elements for switching a plurality AC phases, wherein each AC phase is switchable, using the switching elements, between being either connected to a first DC rail or to a second DC rail. The power converter further includes the computer system according to the first aspect (or any embodiment thereof) for controlling a switching of the switching elements to synthesize an AC output voltage vector. The second aspect may thus seek to solve, or at least alleviate, the problem of unwanted CM currents being produced in such converters.

According to a third aspect, there is provided an electric vehicle. The vehicle includes at least one storage element for storing electrical energy; at least one AC electric machine for propelling the vehicle, and the electric power converter of the second aspect for powering the AC electric machine using the at least one storage element. The third aspect may seek to solve, or at least partially alleviate, the problem of CM currents being produced, especially as the AC electric machine may have parasitic capacitances resulting in such CM currents if not attended to.

Optionally, in some examples, including in at least one preferred example, the vehicle may be a heavy-duty electric vehicle or machine, or an electric marine vessel, e.g. an on-road or off-road truck, excavator, dump truck/dumper, wheel loader, bus, boat, shift, ferry, or any other electric vehicle where there is a need to convert between DC and AC power, as part of e.g. propelling the vehicle. A technical benefit may include that such (commercial) vehicles may be more complex than e.g. personal cars, and include more various sources and loads that may each cause and/or be affected by EMI originating from other sources. For example, a truck may include several subsystems, including rectifiers, inverters, electric motors, and similar which may otherwise cause CM currents and resulting EMI that may interfere with other subsystems, such as those including e.g. batteries, air conditioning, and similar, all power-fed from a same DC voltage system/bus. As envisaged herein, a "vehicle" is not necessarily a road vehicle, but may include also e.g. railed vehicles (such as trains), marine vessels (such as boats, ships, and similar), or any other type of vehicle that relies on electric power. It should also be mentioned that as envisaged herein, a power converter according to the present disclosure does not necessarily form part of a vehicle, but may be a power converter used elsewhere (such as in battery storage systems for home or industrial use, for power conversion/transmission, for solar cells, or for any other suitable use wherein the presence of CM currents is not desirable).

According to a fourth aspect, there is provided a computer-implemented method. The method includes controlling, by processing circuitry of a computer system, a switching of a plurality of switching elements of an electric power converter to synthesize an output alternating current, AC, voltage vector, wherein the power converter is configured to, by means of said switching and for each of a plurality of AC phases, switch the AC phase between being either connected to a first DC rail or to a second DC rail. The method further includes, as part of the controlling and in response to a demand for synthesizing a zero output AC voltage vector, introducing, by the processing circuitry, an inter-phase delay between switching of each AC phase to avoid simultaneous switching of all AC phases from the first DC rail to the second DC rail or vice versa during a same switching period. The fourth aspect may seek to solve a same or similar problem as those of the other aspects.

According to a fifth aspect, there is provided a computer program product comprising program code for performing, when executed by the processing circuitry, the method of claim 12. The computer program product may include a computer-readable (e.g. non-transitory) storage medium on which the computer program code is stored.

According to a sixth aspect, there is provided a computer-readable storage medium that includes instructions, which when executed by the processing circuitry of a computer system, cause the processing circuitry to perform the method of the fourth aspect. The storage medium may be non-transitory.

According to a seventh aspect, there is provided an energy storage system (ESS). The ESS includes at least one storage element for storing of electrical energy (such as e.g. a battery) and the electric power converter of the second aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIG. 1** schematically illustrates a layout of an example electrical system, such as that of an electric vehicle, according to an example.
**FIG. 2A** schematically illustrates an example system of a DC power source, power converter and electric machine, according to an example.
**FIG. 2B** schematically illustrates various CM current paths in the system of FIG. 2A.
**FIG. 3** schematically illustrates an equivalent circuit diagram for a two-level converter interfacing a battery (or other electrical energy storage element) to an electric machine, according to an example.
**FIG. 4** schematically illustrates the concept of synthesizing an output AC voltage vector using a set of active and zero voltage vectors, such as used in SVPWM, according to an example.
**FIG. 5** schematically illustrates an example switching sequence/pattern for synthesizing a sampled reference voltage vector, according to an example.
**FIGS. 6A** and **6B** schematically illustrate examples of asymmetric distribution of parasitic capacitances in the system of FIG. 3, according to various examples.
**FIGS. 7A, 7B, 7C** and **7D** schematically illustrate distribution of parasitic capacitances when transitioning between zero voltage vectors via intermediate active voltage vectors, according to various examples.
**FIG. 8** schematically illustrates an example of a modified switching sequence/pattern to reduce CM currents in accordance with the present disclosure, according to an example.
**FIG. 9** schematically illustrates a flowchart of examples of a method for reducing CM currents in accordance with the present disclosure, according to various examples.
**FIG. 10** schematically illustrates an example computer system for reducing CM currents in accordance with the present disclosure, according to various examples.
**FIGS. 11A** and **11B** schematically illustrate examples of a (heavy-duty) electric vehicle and energy storage system of the present disclosure, respectively, according to various examples.
**FIG. 12** schematically illustrates a schematic diagram of an example computer system for implementing examples disclosed herein, according to an example.
**FIGS. 13A to 13F** schematically illustrate plots of various CM voltages and currents obtained from numerical simulations of a system, to verify the plausibility of the solution envisaged herein.
**FIGS. 14A** and **14F** schematically illustrate plots of various CM voltages and currents as obtained from measurements on a real heavy-duty electric truck, to verify the plausibility of the solution as envisaged herein.

## DETAILED DESCRIPTION

The detailed description set forth below provides information and examples of the disclosed technology with sufficient detail to enable those skilled in the art to practice the disclosure.

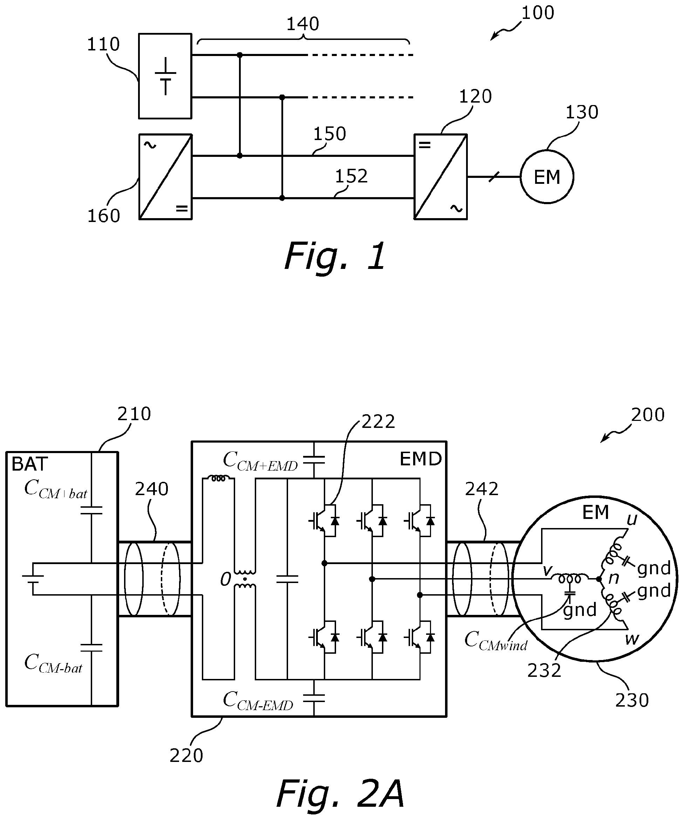

The problem which the present disclosure seeks to solve or at least alleviate will now be described in more detail with reference to FIG. 1.

**FIG. 1** schematically illustrates at least part of an electrical system 100, which may for example be part of an electric vehicle system or similar. The system 100 includes at least one battery 110 configured to store electrical energy. The battery 110 may for example be a battery module including a plurality of battery cells, a collection of battery modules forming a battery pack, or similar. Instead of the battery 110, some other storage element for storing of electrical energy may be used, such as e.g. a supercapacitor, or similar. Generally herein, exactly how the DC power is provided to the system 100 is not that important, and the battery (or energy storage element) may be replaced with any entity capable of outputting such DC power, such as e.g. a rectifier or similar. The system 100 further includes a power converter 120 configured to convert between DC and AC power, and to thereby provide power to an AC electric machine (EM) 130. The power converter 120 may be referred to as an electric machine drive (EMD), and may for example be an electric power inverter.

The battery 110 and the power converter 120 are each connected to a same DC bus 140, that may include e.g. cables and various junction boxes (not shown). The DC bus 140 includes at least a first DC rail 150 and a second DC rail 152. The first DC rail 150 may for example be connected to a positive terminal of the battery 110, while the second DC rail 152 may be connected to a negative terminal of the battery 110. As used herein, a "rail" may also be referred to as e.g. a link, a terminal, or similar, as its meaning is mainly to identify a part of the DC bus 140 that has a particular polarity, and to distinguish between different such parts having different polarities. The first DC rail 150 may for example be referred to as a positive DC rail and the second DC rail 152 may for example be referred to as a negative DC rail, or vice versa. As used herein, the terms "positive" and "relative" are with respect to each other, e.g. the negative DC rail 152 may still be referred to as "negative" even if it is grounded, as long as its voltage potential is lower than that of the positive DC rail 150, and vice versa.

The system 100 may optionally include other components, such as another power converter 160 that may for example be an AC-charger for converting AC power from an external grid to DC voltage/power output on the DC bus 140 (that is, the power converter 160 may function as a rectifier). In some examples, it is also envisaged that the power converter 120 may operate in both directions, and e.g. operate both as an inverter in case DC power is being fed to the EM 130, and as a rectifier in case the EM 130 is operated as a generator such that AC power generated by the EM 130 may be converted to DC power output on the DC bus 140. This may be relevant if e.g. the system 100 forms part of an electric vehicle configured to use regenerative braking or similar, wherein the EM 130 is operable as a generator in order to help reduce a speed of the vehicle.

Although not explicitly shown in FIG. 1, it is further envisaged that the system 100 may include many other components that are also directly or indirectly connected to the DC bus 140. For example, the system 100 may include one or more low-volt batteries (such as 24 V batteries) and one or more DC-to-DC converters for transforming the higher voltage of the DC bus 140 (which may e.g. be several hundred volts) down to a lower voltage (such as around 24 V) for e.g. charging of such low-volt batteries. Likewise, the system 100 may in some examples include e.g. one or more other EM's configured to e.g. run a compressor (as part of a cooling system of e.g. a vehicle), or similar, and suitable power converters (such as inverters) for powering such one or more other EM's from the DC bus 140. The system 100 may, of course, also include one or more other EM's (in addition to the EM 130) also responsible for providing propulsion of e.g. a vehicle. For example, in a larger system than that illustrated in FIG. 1A, the included components may include traction batteries as a main energy storage for suppling and/or receiving energy; an EMD converting between DC and AC for an EM. The EM for converting between electric power and mechanical power; cables to interconnect all subsystems; various auxiliaries in terms of e.g. converters from DC to DC or DC to AC; battery chargers for suppling the vehicle with power from the grid, which may e.g. be non-isolated, separate or integrated, conductive, inductive, etc., depending on the exact configuration and requirements of the system, and similar. The system 100 may be referred to, if e.g. part of a vehicle, as a traction voltage system (TVS).

In any way, as part of the operation of the one or more power converters (such as 120, 160), CM currents may be generated and cause EMI that may negatively affect one or more other components of the system 100. As envisaged herein, such CM current is the sum of all currents in the main conductors that flows back to the source, e.g. via a vehicle chassis or via cable shields, or similar. CM current is caused by the switching of power converters, and is conducted by parasitic/internal CM-capacitances connecting the poles/rails of the components to the chassis. Depending on the exact layout of the system, the CM current can be a source of accelerated aging in for example EM bearings and/or EM windings, radiated EMI from long cables, and functional disturbance in other subsystems conductively connected to the system. Known methods to reduce the amount and sensitivity of/to the CM currents in such systems include for example insertion of intentional CM current guiding capacitors, and/or active or passive means of CM reduction. CM-capacitors may be inserted to guide currents from unintentional parasitic current paths, and the CM current does not need to be equally distributed in both the positive and negative rails/conductors. Passive means of reducing CM current may for example involve insertion of induction elements in the main current paths, while active means may include insertion of a CM reactor with an actively controlled dedicated CM-suppression winding, and/or by interleaving in the modulation of the power converter(s) in case of e.g. a traction drive with multi-phase stator windings. As will be described in what follows, the present disclosure proposes a method of reducing CM current that does not rely on such contemporary means.

**FIG. 2A** schematically illustrates a system 200 which in turn represents a minimal configuration of the system 100, including only a battery (BAT) 210, a two-level three-phase converter/rectifier (EMD) 220, and a Wye (Y)-connected electric machine (EM) 230. The battery 210 and EMD 220 are connected using a first cable 240 with at least two conductors (one for each polarity), and the EM 230 and EMD 220 are connected using a second cable 242 with at least three conductors (on for each phase). As envisaged herein, the EM 230 may not necessarily be in a Wye-configuration, but may instead be e.g. in a Delta ($\Delta$)-configuration or similar.

The battery 210 is assumed to have parasitic/internal capacitances between its positive and negative terminals and ground, here illustrated by capacitances $C_{CM+bat}$ and $C_{CM-bat}$ respectively. The EMD 220 is assumed to have parasitic/internal capacitances from its positive and negative pole/rail, here illustrated by capacitances $C_{CM+EMD}$ and $C_{CM-EMD}$, respectively. The EM 230 is assumed to have parasitic capacitances between each of its three phase windings 232 to ground, here each illustrated by a respective capacitance $C_{CMwind}$. Other quantities, such as internal resistances, stray inductances and/or other capacitances may of course also be assumed, but are not included for the purpose of illustrating the problem targeted by the present disclosure.

Within the EMD 220, switching elements 222 (e.g. IGBTs, here shown with respective antiparallel diodes) are responsible for switching the three phases u, v, w such that each phase is either connected to the positive or negative rail of the EMD 220.

If simulating the system 200, it may for example be assumed that each of the battery 210, EMD 220 and EM 230 has grounded chassis, and that the parasitic capacitances are connected between the terminals/bus and the chassis as illustrated in FIG. 2A. Further, the battery 210 may for example be simulated as a voltage source having a suitable series inductance and resistance, and similar. In FIG. 2A, under the assumption that an impedance in the shielding of the cables is small, a ground plane has been omitted.

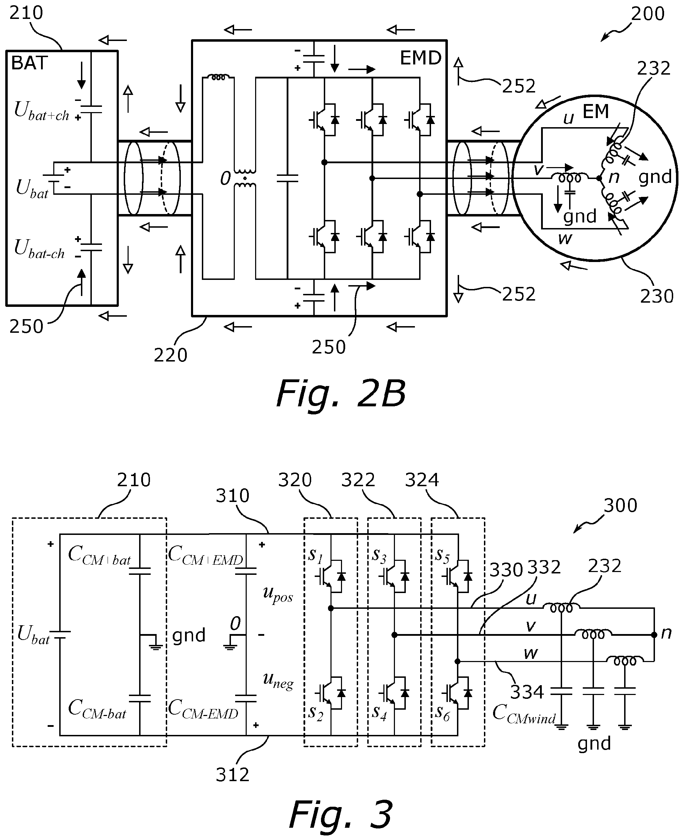

**FIG. 2B** schematically illustrates the flow of various CM currents in the system 200, wherein a convention has been used in which all outbound currents are shown having a same reference direction (from battery to load, from chassis to rails and load). The source of the CM disturbances is the interaction between the three-phase converter/EMD 220 and the parasitic capacitances $C_{CMwind}$ between the EM windings 232 and ground. As the EMD 220 switches the phases u, v, and w, these parasitic capacitances will alter between four asymmetric states, which will, as will be explained in more detail later herein, correspond to either: a) having all phases connected to the negative rail of the EMD 220 (a state "(000)"); b) having all phases connected to the positive rail of the EMD 220 (a state "(111)"); and c) two states each having two phases connected to one rail of the EMD 220 and the remaining phase connected to the other rail of the EMD 220 (states "(110), (101), (011), (010), (100) and (001)"), wherein the exact sequence of these states depend on the exact modulation/switching scheme used as part of controlling the EMD 220. As a consequence, the electric potentials at the terminals of the battery 210 will vary slightly depending on in which switching state the EMD 220 is currently in, which will drive CM currents through the EM windings 232. The return paths of the CM currents are the CM-capacitances in the EMD 220 and battery 210, as indicated by the arrows in FIG. 2B. In FIG. 2B, currents indicated with solid arrows 250 are CM currents inside the respective components, while currents indicated with hollow arrows 252 are CM currents within shielding and enclosures/chassis.

**FIG. 3** schematically illustrates a circuit-equivalent of the system 200, with focus mainly on the various CM-capacitances. Here, it is illustrated in more detail how the EMD 220 has a first (positive) DC rail 310 and a second (negative) DC rail 312, and how a total of six switching elements $s_1$ through $s_6$ are divided into three phase legs 320, 322 and 324, each phase leg 32x including the pair of switching elements $s_{x+1}$ and $s_{x+2}$. The pair of switching elements in each phase leg is configured such that the switching elements are switched in a complementary way, such that the two switches are never both opened (i.e. "on") or both closed (i.e. "off") at a same time (to avoid shorting the two DC rails 310 and 312 and to avoid leaving a respective phase 33X, such as 330, 332 and/or 334, floating). For example, by closing switching element $s_{x+1}$ and opening switching element $s_{x+2}$, the phase 33X is connected to the first DC rail 310, while instead opening the switching element $s_{x+1}$ and closing the switching element $s_{x+2}$ connects the phase 33X to the second DC rail 312.

As the lower switching elements $s_2$, $s_4$ and $s_6$ of the phase legs 320, 322 and 324 are switched opposite to their upper counterparts $s_1$, $s_3$ and $s_5$, a current switching state of the EMD 220 can be indicated as a triplet $(S_1, S_2, S_3)$, where $S_i$ = 1 indicates that the switching element $s_i$ is closed and $S_i$ = 0 indicates that the switching element $s_i$ is opened. Consequently, for the system 200, 300, there is a total number of eight possible switching states, as summarized in Table 1.

*Table 1. Switching vectors and corresponding phase and line voltages scaled by $U_{bat}$.*

| State $j$ | $s_{1,j}$ | $s_{3,j}$ | $s_{5,j}$ | $v_{un,j}$ | $v_{vn,j}$ | $v_{wn,j}$ | $v_{uv,j}$ | $v_{vw,j}$ | $v_{wu,j}$ | Type |
|---|---|---|---|---|---|---|---|---|---|---|
| 0 | 0 | 0 | 0 | 0 | 0 | 0 | 0 | 0 | 0 | Zero |
| 1 | 1 | 0 | 0 | 2/3 | -1/3 | -1/3 | 1 | 0 | -1 | Active |
| 2 | 1 | 1 | 0 | 1/3 | 1/3 | -2/3 | 0 | 1 | -1 | Active |
| 3 | 0 | 1 | 0 | -1/3 | 2/3 | -1/3 | -1 | 1 | 0 | Active |
| 4 | 0 | 1 | 1 | -2/3 | 1/3 | 1/3 | -1 | 0 | 1 | Active |
| 5 | 0 | 0 | 1 | -1/3 | -1/3 | 2/3 | 0 | -1 | 1 | Active |
| 6 | 1 | 0 | 1 | 1/3 | -2/3 | 1/3 | 1 | -1 | 0 | Active |

(continued)

| State $j$ | $s_{1,j}$ | $s_{3,j}$ | $s_{5,j}$ | $v_{un,j}$ | $v_{vn,j}$ | $v_{wn,j}$ | $v_{uv,j}$ | $v_{vw,j}$ | $v_{wu,j}$ | Type |
|---|---|---|---|---|---|---|---|---|---|---|
| 7 | 1 | 1 | 1 | 0 | 0 | 0 | 0 | 0 | 0 | Zero |

Table 1 may also be summarized as

$$V_j^{line} = \begin{bmatrix} v_{uv,j} \\ v_{vw,j} \\ v_{wu,j} \end{bmatrix} = U_{bat} \begin{bmatrix} 1 & -1 & 0 \\ 0 & 1 & -1 \\ -1 & 0 & 1 \end{bmatrix} \begin{bmatrix} s_{1,j} \\ s_{3,j} \\ s_{5,j} \end{bmatrix}$$

for the line (i.e. phase-to-phase) voltages $V_{uv}$, $V_{vw}$ and $V_{wu}$ when in the $j$,:th switching state, and

$$V_j^{phase} \begin{bmatrix} v_{un,j} \\ v_{vn,j} \\ v_{wn,j} \end{bmatrix} = \frac{1}{3} U_{bat} \begin{bmatrix} 2 & -1 & -1 \\ -1 & 2 & -1 \\ -1 & -1 & 2 \end{bmatrix} \begin{bmatrix} s_{1,j} \\ s_{3,j} \\ s_{5,j} \end{bmatrix},$$

for the phase voltages $v_{un}$, $v_{vn}$ and v when in the $j$:th switching state, where $s_{i,j}$ = 1 and 0 corresponds to the switching element being closed/on and open/off in the j:th switching state, respectively. Using the transformation

$$T_{uvw-\alpha\beta} = \frac{2}{3} \begin{bmatrix} 1 & -\frac{1}{2} & -\frac{1}{2} \\ 0 & \frac{\sqrt{3}}{2} & -\frac{\sqrt{3}}{2} \end{bmatrix},$$

the vector representations of the phase voltages corresponding to the eight possible combinations may be obtained as

$$V_j = T_{uvw-\alpha\beta} V_j^{phase},$$

i.e. as an orthogonal projection of $[s_{1,j}, s_{3,j}, s_{5,j}]^T$ onto a two-dimensional plane perpendicular to the three-dimensional vector $[1,1,1]^T$.

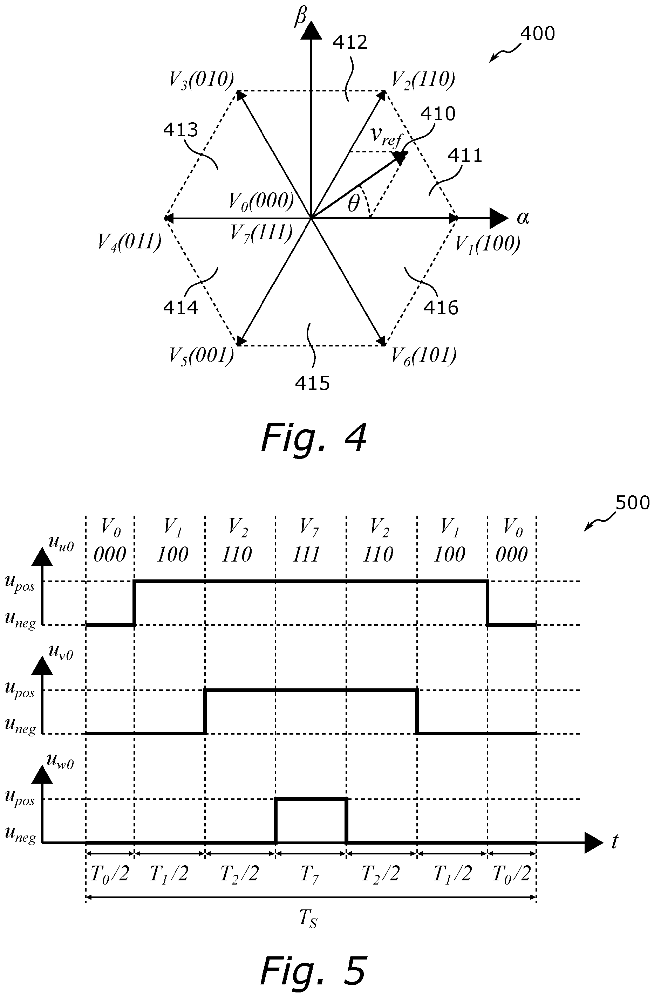

**FIG. 4** schematically illustrates the results of such a transformation, where it is noted that the vectors $V_0$ and $V_7$ become zero vectors while the vectors $V_1$ to $V_6$ are finite and each separated by an angle of 60°. To synthesize a reference vector 410 $v_{ref}(t)$, it is assumed that this reference vector is sampled with a frequency $f_s$, i.e. such that a time between two consecutive samples is $T_s = 1/f_s$. During each sample interval, the reference vector is assumed to be constant and equal to $v_{ref}$, i.e. with a magnitude $|v_{ref}|$ and phase $\theta$ as shown in FIG. 4. Each vector $V_j$ may be expressed as

$$V_j = \frac{2}{3} \left( v_{un,j} e^{i0} + v_{vn,j} e^{i2\pi/3} + v_{wn,j} e^{-i2\pi/3} \right),$$

from which, based on Table 1, it can be deduced that

$$V_0 = V_7 = 0$$

and

$$V_j = \frac{2}{3} U_{bat} e^{(j-1)\frac{\pi}{3}},$$

where $j$ = 1,2, ...,6.

The space-vector diagram shown in FIG. 4 includes six sectors 411, 412, 413, 414, 415 and 416, wherein sector 41X is bounded by two vectors $V_a$ and $V_b$, where $a = X$ and $b = (X + 1)$ modulo 6. In the example of FIG. 4, the vector $v_{ref}$ lies in the sector 411 and thus between vectors $V_{a=1}$ and $V_{b=2}$. The reference vector $v_{ref}$ may be synthesized, during the sample interval between time $t$ and $t + T_s$ by switching between the vectors $V_a$, $V_b$, $V_0$ and $V_7$, wherein a total time (e.g. "dwell time") spent in each of their corresponding switching states is denoted $T_a$, $T_b$, $T_0$ and $T_7$, respectively. The dwell times may be found based on volt-second balancing as

$$\left|v_{ref}\right|T_s = |V_a|T_a + |V_b|T_b + |V_0|T_0 + |V_7|T_7,$$

where, by definition, $T_S = T_a + T_B + T_0 + T_7$.

As an example, to synthesize the reference vector $v_{ref} = |v_{ref}|e^{i\theta}|$ shown in FIG. 4, it is observed that $V_a = V_1$, $V_b = V_2$, and that

$$|V_1| = \tfrac{2}{3} U_{bat} \text{ and } |V_2| = \tfrac{2}{3} U_{bat} e^{i\pi/3},$$

from which follows that

$$\left|v_{ref}\right|e^{i\theta} T_S = \frac{2}{3} U_{bat} T_a + \frac{2}{3} U_{bat} T_b e^{i\pi/3}.$$

After comparing real and imaginary parts, it may be concluded that

$$\left|v_{ref}\right|T_S \cos\theta = \frac{2}{3} U_{bat} T_a + \frac{1}{3} U_{bat} T_b,$$

$$\left|v_{ref}\right|T_S \sin\theta = \frac{1}{\sqrt{3}} U_{bat} T_b.$$

From the additional condition that $T_S = T_a + T_b + \tilde{T}_0$, where $\tilde{T}_0 = T_0 + T_7$, three equations with three unknowns ($T_a$, $T_b$ and $\tilde{T}_0$) can be solved to obtain

$$T_a = \frac{\sqrt{3}\left|v_{ref}\right|T_s}{U_{bat}} \sin\left(\frac{\pi}{3} - \theta\right), \qquad (1)$$

$$T_b = \frac{\sqrt{3}\left|v_{ref}\right|T_s}{U_{bat}} \sin\theta, \qquad (2)$$

$$\tilde{T}_0 = T_s - T_a - T_b, \qquad (3)$$

when $0 \leq \theta < \pi/3$, i.e. as long as the reference vector $v_{ref}$ is in the first sector 411. To extend these expressions to other sectors 412-416, the angle $\theta$ in the above expressions can be replaced with $0' = \theta - (X - 1)\pi/3$, where $X$ corresponds to sector 41X, and the thus-achieved dwell-times $T_a$ and $T_b$ will be for the vectors $V_X$ and $V_{X'}$, respectively, where $X' = (X + 1)$ modulo 6.

It is noted from the above that as long as the reference vector $v_{ref}$ does not coincide (i.e. is oriented in a same direction as) any of the vectors $V_a$ and $V_b$, at least some time $\tilde{T} = T_0 + T_7 > 0$ will be spent in one or both of the zero switching states/vectors $V_0$ and $V_7$.

FIG. 5 schematically illustrates one possible way of switching (i.e. a switching sequence 500) between the states $V_a$, $V_b$, $V_0$ and $V_7$ during a switching period between time $t$ and $t + T_S$, wherein in this example the reference vector $v_{ref}$ is in the first sector 411 and $V_a = V_1$ and $V_b = V_2$. To reduce switching losses, the states are preferably visited in an order such that only a single pair of switching elements (i.e. $s_1$ and $s_2$; $s_3$ and $s_4$; or $s_5$ and $s_6$) are switched at once. Thus, the switching sequence 500 starts at time $t$ in the state corresponding to $V_0$, and then proceeds by moving to the states corresponding to vectors $V_1$, $V_2$, $V_7$, $V_2$ and $V_1$ before returning back to the state corresponding to vector $V_0$ again. How long to stay in each state (in total) is calculated using the expressions for $T_{a=1}$ and $T_{b=2}$, and it may be decided to divide the times such as indicated in FIG. 5. It may, for example, be decided that $T_0 = T_7 = \tilde{T}_0/2$, or similar. In FIG. 5, the voltages $u_{u0}$, $u_{v0}$ and $u_{w0}$ are the phase-to-zero/ground voltages as indicated in FIG. 3.

The vectors $V_0$ to $V_7$ may be referred to as space vectors, and a switching procedure such as that illustrated in FIG. 5 may be referred to as a space vector modulation (SVM)- or space vector pulse-width modulation (SVPWM)-type procedure. Although not explicitly discussed herein, instead of explicitly calculating the various dwell times for each switching state, switching of the phases may sometimes be performed automatically by introducing a carrier signal and by comparing each of three phase reference signals against this carrier signal, as often done to implement PWM. SVPWM may for example be achieved by introducing a DC component to such PWM, by, for each time step, introducing a DC offset to the carrier signal such that the carrier signal is located symmetrically with respect to the currently lowest and highest values of the three phase reference signals.

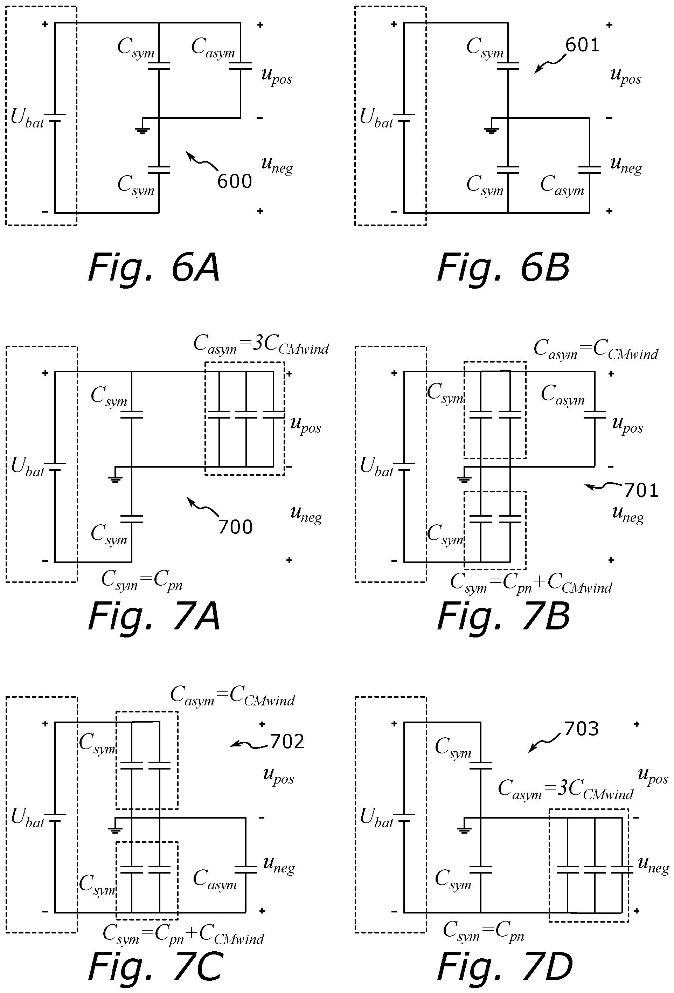

With further reference to FIGS. 6A and 6B, the envisaged origin of CM currents in the system 300 will now be described in more detail.

**FIGS. 6A** and **6B** schematically illustrates how, at least for an odd number of phases (such as three), the winding-to-core capacitances $C_{CMwind}$ of the EM 230 will, in each possible switching state $j$, be asymmetrically distributed relative the positive and negative DC rails 310 and 312, wherein a size of this asymmetrical capacitance, $C_{asym,j}$, depends on a difference $\Delta_j$ between a number of switching elements that are turned on and turned off in each switching state, i.e. such that $\Delta_j = n_{on,j} - n_{off,j}$ where $n_{on,j}$ and $n_{off,j}$ is the number of switching elements in the $j$:th state that are turned on and off, respectively. Thus, the asymmetrical capacitance equals

$$C_{asym,j} = |\Delta_j| C_{CMwind},$$

and is located as in FIG. 6A (in a situation 600, i.e. between ground and the positive DC rail 310) when $\Delta_j > 0$ and as in FIG. 6B (in a situation 601, i.e. between ground and the negative DC rail 312) when $\Delta_j < 0$. Likewise, as shown in FIGS. 6A and 6B, a symmetrical capacitance contribution $C_{sym,j}$ will be connected between ground and each of the positive and negative DC rails 310 and 312, where a size of this symmetrical contribution is

$$C_{sym,j} = C_{pn} + m_j C_{CMwind},$$

where $m_j = \min(n_{on,j}, n_{off,j})$. Here, $C_{pn}$ is a sum of the EMD and battery CM capacitances defined as

$$C_{pn} = C_{CM+bat} + C_{CM+EMD} = C_{CM-bat} + C_{CM-EMD},$$

where $C_{CM+/-bat}$ are the capacitances connected between ground and the positive/negative pole (DC rail) of the battery 210, and where $C_{CM+/-EMD}$ are the capacitances connected between ground and the positive/negative pole (DC rail) of the EMD 220, respectively.

The voltages $u_{pos}$ and $u_{neg}$ as shown in FIG. 6A, i.e. the voltages between the positive and negative DC rails 310 and 312, respectively, and ground, are defined as

$$u_{pos,j} = U_{bat} \frac{C_{sym,j}}{2C_{sym,j} + C_{asym,j}} = U_{bat} \frac{X_j}{2X_j + 1}$$

and

$$u_{neg,j} = -U_{bat} \frac{C_{sym,j} + C_{asym,j}}{2C_{sym,j} + C_{asym,j}} = -U_{bat} \frac{X_j + 1}{2X_j + 1}$$

if $\Delta_j > 0$, and as

$$u_{pos,j} = U_{bat} \frac{X_j + 1}{2X_j + 1}$$

and

$$u_{neg,j} = -U_{bat} \frac{X_j}{2X_j + 1}$$

if $\Delta_j < 0$, where $X_j$ is a ratio of the symmetrical to asymmetrical capacitance defined as

$$X_j = \frac{C_{sym,j}}{C_{asym,j}}.$$

A steady-state CM voltage in state j may be defined as

$$u_{CM,j} = \frac{u_{pos,j} + u_{neg,j}}{2}.$$

A common-mode (CMDC) voltage due to switching between states $j$ and $k$ may be defined as

$$u_{CMDC,j,k} = u_{CM,j} - u_{CM,k} = -\frac{U_{bat}}{2}\left(c_j \frac{1}{2X_j + 1} - c_k \frac{1}{2X_k + 1}\right), \qquad (4)$$

where $c_j = 1$ if $\Delta_j > 0$ and $c_j = -1$ if $\Delta_j < 0$, and where $c_k = 1$ if $\Delta_k > 0$ and $c_k = -1$ if $\Delta_k < 0$.
If e.g. switching between states (111) and (000), the CMDC voltage can be written as

$$u_{CMDC,7,0} = u_{CM,7} - u_{CM,0} = -\frac{U_{bat}}{2}\left(\frac{1}{2X_7 + 1} + \frac{1}{2X_0 + 1}\right) = -U_{bat}\frac{1}{2X_7 + 1},$$

as $X_7 = X_0 = C_{pn}/3C_{CMwind}$. One possible solution for reducing the CMDC voltage (and thereby the CM current) is therefore to increase the ratio $X_7 = X_0$. This may be achieved e.g. by increasing a ratio

$$X_{EMD} = \frac{C_{CM+EMD}}{C_{CMwind}} = \frac{C_{CM-EMD}}{C_{CMwind}},$$

as, for the states (000) and (111) it is assumed that

$$X_7 = X_0 = \frac{C_{sym}}{C_{asym}} = \frac{C_{pn}}{3C_{CMwind}} = \frac{C_{CM+/-bat}}{3C_{CMwind}} + \frac{1}{3}X_{EMD}.$$

For example, simulations of the system 200 were performed for switching directly between states (111) and (000) for different values of $X_{EMD}$. For $X_{EMD} = 2.7$, it was noted that $u_{CMDC}$ behaved like a square wave with a peak-to-peak amplitude of 40.6 V. For $X_{EMD} = 50$, with all other parameters the same, the resulting peak-to-peak amplitude was reduced to 6.3 V. Increasing $X_{EMD}$ from 2.7 to 50, by increasing the CM-capacitance $C_{CM+/-EMD}$, thus resulted in a reduction of the magnitude of the CMDC voltage from 40.6 to 6.3 V. A reason for e.g. increasing the CM-capacitance in the EMD 220 and not e.g. in the battery 210 may be that the CM current via the EM 210 should be returned to the source as close as possible to where it is emitted, i.e. if the CM current leaves the EM winding-to-core capacitance $C_{CMwind}$ it should return to the EMD capacitance $C_{CM+EMD}$ and $C_{CM-EMD}$. If instead increasing the CM-capacitance in the battery 210, the CM current will flow a longer distance in e.g. the vehicle. CM currents flowing in the vehicle may cause EMI in terms of radiated disturbances and/or conducted disturbances where the CM current is returned, which may be an undesirable behavior. However, as the maximum allowed total CM-capacitance in a vehicle system is often restricted by standards, the freedom to arbitrarily choose the CM-capacitances is limited, and it may not always be possible to e.g. achieve an EMD CM-capacitance $C_{CM+/-EMD}$ that is 50, or even more than 50, times larger than that of the EM winding-to-core parasitic capacitance $C_{CMwind}$, thus making it impossible to achieve $X_{EMD} = 50$ or $X_{EMD} > 50$. There is thus a need for another solution of how to reduce CM current in e.g. a vehicle.
As will now be described in more detail with reference also to FIGS. 7A, 7B, 7C, 7D, 8, 9, 10, 11A, 11B and 12, the present disclosure provides a solution to this problem in which the CM current is instead reduced by alternating how the phases are switched in order to synthesize reference vectors $v_{ref}$.

As realized by the inventors, the voltage $u_{CMDC}$ will remain unchanged if introducing a delay between switching of the three phases 330, 332 and 334, as the voltage $u_{CMDC}$ is "stationary" after the switching is complete. However, the transient CM voltage and current is affected if the switching is performed with a delay, as the asymmetric capacitances will then be charged/discharged with a time delay and is thus not allowed to aggregate (as much) over time. The present disclosure is particularly relevant for the case when the contemporary switching scheme (such as illustrated in FIG. 5) requires a direct transition from (000) to (111), or from (111) to (000), such as would be the case if the amplitude of the reference vector $|v_{ref}|$ goes to zero. This may be the situation if there is e.g. a demand for the EM 230 to be on "standby", i.e. when no need to apply voltage to the EM 230 is currently present. Phrased differently, with a zero magnitude of $v_{ref}$, the dwell times $T_a$ and $T_b$ for the active vectors $V_a$ and $V_b$, as provided by equations (1) and (2), will go to zero and $\bar{T}_0 \rightarrow T_s$, e.g. such that $T_0 = T_7 \rightarrow T_S/2$, and such that the switching sequence will include only direct transitions between the zero voltage states corresponding to $V_0$ and $V_7$. In what follows, three different scenarios will be considered, namely 1) direct transitions from (111) to (000); 2) a time delay of $t_d = 0.4 \mu s$ introduced between switching of each phase, and 3) a time delay of $t_d = 1 \mu s$ introduced between switching of each phase.

FIG. 7A schematically illustrates a situation 700 corresponding to the state (111) with all phases 330, 332 and 334 connected to the positive DC rail 310. As a consequence, $\Delta_1 = 3$, $m_7 = 0$ and the capacitances are $C_{asym} = 3C_{CMwind}$ and $C_{sym} = C_{pn}$.

FIG. 7B schematically illustrates a situation 701 corresponding to the state (110), (101) or (011), i.e. any state with two of the phases 320, 322 and 324 connected to the positive DC rail 310 and the remaining phase to the negative DC rail 312. Here, $\Delta_j = 1$, $m_j = 1$, and the capacitances are $C_{asym} = C_{CMwind}$ and $C_{sym} = C_{pn} + C_{CMwind}$.

FIG. 7C schematically illustrates a situation 702 corresponding to the state (001), (010) or (100), i.e. any state with one of the phases 320, 322 and 324 connected to the positive DC rail3 10 and the remaining two phases to the negative DC rail 312. Here, $\Delta_j = 1$, $m_j = 1$, and the capacitances are $C_{asym} = C_{CMwind}$ and $C_{sym} = C_{pn} + C_{CMwind}$.

FIG. 7D schematically illustrates a situation 703 corresponding to the state (000) with all phases 330, 332 and 334 connected to the negative DC rail 310. Here, $\Delta_j = -3$, $m_j = 0$, and the capacitances are $C_{asym} = 3C_{CMwind}$ and $C_{sym} = C_{pn}$.

The first scenario thus includes switching from the state shown in FIG. 7A to the state shown in FIG. 7D.

The second scenario, in accordance with the solution of the present disclosure, instead includes transitioning from the state shown in FIG. 7A to the state shown in FIG. 7D via the intermediate states shown in FIGS. 7B and 7C, i.e. such that instead of transitioning directly from (111) to (000), the transitioning is performed from (111) to e.g. (110), from (110) to e.g. (100), and from (100) to (000), with a delay of $t_D = 0.4 \mu s$ between each sub transition.

Likewise, the third scenario is similar to scenario number two, but with an increased delay of $t_d = 1 \mu s$ between each sub transition. However, the present disclosure also envisaged to use other non-zero values of $t_d$ than 0.4 or 1.0.

As will be illustrated by experimental data later herein, scenarios two and three will result in a reduced CM voltage when switching between the phases, as well as a reduced AC phase voltage, AC CM voltage, and AC CM current. This is because the introduction of the delays avoids charging/discharging all asymmetric capacitance(s) at the same time, and thus prevents (or at least reduces) an aggregation of contributions to CM voltage and current from these capacitances over time.

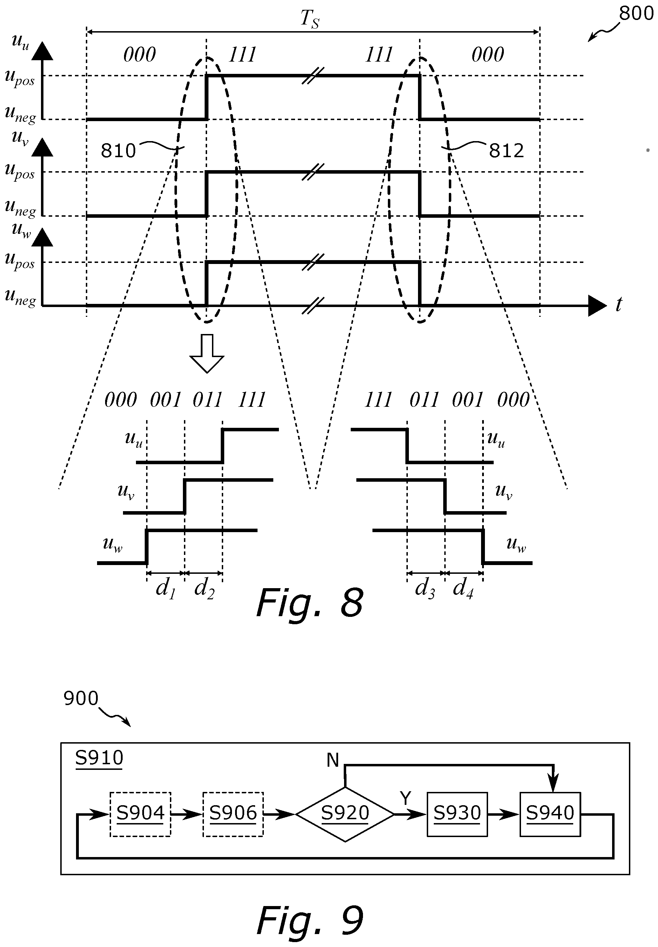

FIG. 8 schematically illustrates an example modified switching sequence 800 in accordance with the present disclosure, in a scenario where there is a demand to output a zero AC voltage vector (due to the EM 230 for example being in standby, or similar). As can be deduced from FIG. 8, this would normally result in all of the switching period $T_S$ being spent in the states (000) and (111), i.e. the reference vector is synthesized using only the vectors $V_0$ and $V_7$. According to the present disclosure, the CMDC voltage and current can be reduced by instead introducing a delay between switching of each phase, such as illustrated in the regions 810 and 812 wherein instead of switching all phases simultaneously to move directly from (111) to (000), or from (000) to (111), a delay $d_1$ is introduced between switching on the third phase 324 and the second phase 322, a delay $d_2$ is introduced between switching on the second phase 322 and the first phase 320, a delay $d_3$ is introduced between switching off the first phase 320 and the second phase 322, and a delay $d_4$ is introduced between switching off the second phase 322 and the third phase 324.

As envisaged herein, the delays $d_1$ to $d_4$ may for example be equal (e.g. equal to $t_d$) or different. For example, if a sampling period $T_S$ is on the order of between a hundred microseconds ($\mu s$) and a few milliseconds ($ms$), the size of the delays as envisaged herein may for example be on the order of a fraction of a microsecond up to a few microseconds.

To avoid voltage drift over time, it is envisaged that the order in which each phase is switched may be random. In other examples, it is envisaged that the order in which each phase is switched changes between different switching periods $T_S$. For example, the transition between 000 to 001 to 011 to 111, and then between 111 to 011 to 001 to 000 during one switching period (as illustrated at the bottom left of FIG. 8) would result in the synthesizing of an output vector belonging to sector 414 as shown in FIG. 4. To avoid voltage drift over time, in the next switching period, it envisaged to change the order in which the AC phases are switched such that the synthesized output vectors instead are opposite and belong to sector 411. For example, instead of continuing to first switch on the third phase w, followed by the second phase v and finally the first phase u when transitioning from 000 to 111, the control of the switching is changed such that the first phase u is switched on first, then the second phase v and then the third phase w, resulting in the transition from 000 to 100 to 110 to 111 instead (where a similar reasoning may be applied also to the transitioning from 111 to 000 via the intermediate states). As generally envisaged herein, the switching is performed such that the switching of each AC phase is ordered to generate a zero average output AC voltage vector over a plurality of switching periods. This may include using a predefined sequence of patterns, wherein the patterns are such that if a particular section as shown in FIG. 4 is visited at some points, the opposite section is also visited, as this would cause the average output to be zero over time. Phrased differently, it is envisaged to e.g. use a same delay between switching of each phase, but that the order in which the phases are turned on and off is selected to generate a zero average output vector over time.

FIG. 9 schematically illustrates a flowchart of one or more examples of a method 900 of switching a power converter as envisaged herein.

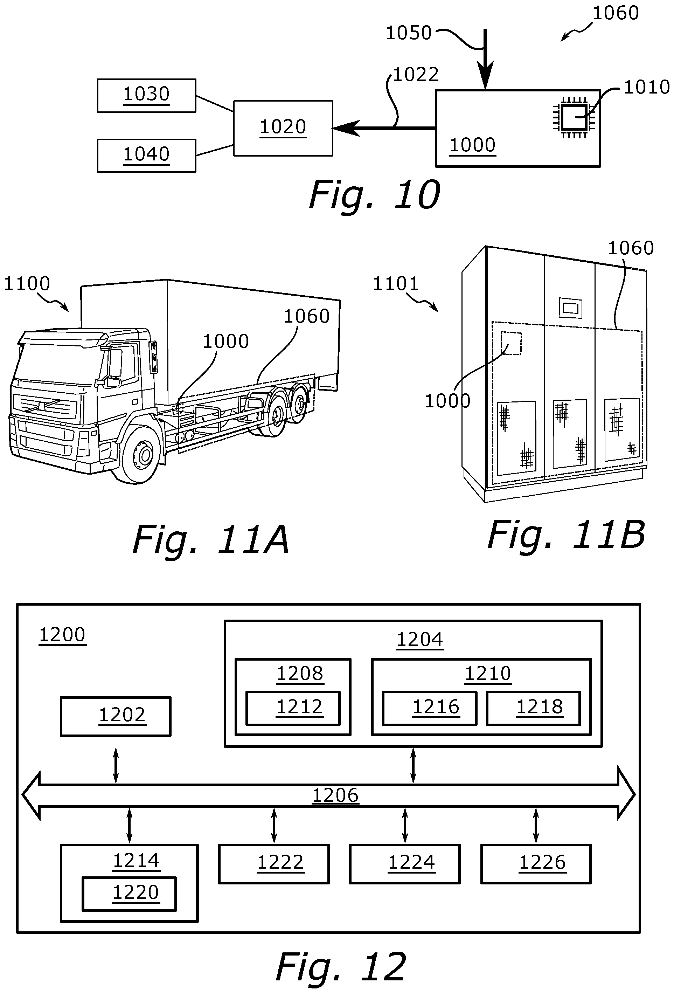

**FIG. 10** schematically illustrates one or more examples of a computer system 1000 for performing such a method.

The computer system 1000 includes processing circuitry 1010 that is configured to control (e.g. as an operation S910 of the method 900) a switching of a plurality of switching elements of an electric power converter 1020, e.g. by sending control signals 1022 to the power converter 1020 based on which switching elements that are to be closed or opened at any time instance. For example, the power converter 1020 may include the switching elements $s_1$, $s_3$ and $s_5$, and $s_2$, $s_4$ and $s_6$ (as illustrated in FIG. 3). Depending on the exact configuration of the power converter 1020, there may of course be fewer or more than six switching elements in total, and the switching elements may be configured in any suitable way.

As described herein, the power converter 1020 is configured to synthesize, by switching of the switching elements, an output AC voltage vector (to e.g. follow the reference vector $v_{ref}$), wherein an AC voltage vector is a vector having one component per phase, or e.g. any number of components from which the voltages for each phase may be derived (using e.g. established transformations such as the Clarke transformation, Park transformation, etc., and/or combinations thereof. For example, an AC voltage vector may be defined as $v(t) = [v_{u0}(t), v_{v0}(t), v_{w0}(t)]^T$ or similar. The power converter 1020 synthesizes the output AC voltage vector by using the switching elements to switch the AC phases such that they are individually either connected to a positive DC rail/link/bus or negative DC rail/link/bus. The power converter 1020 is for example a two-level three-phase converter such as exemplified already herein, but may in other example be some other type of voltage converter, such as a converter having more than six switches and thus more space vector states, which may e.g. help to reduce unwanted harmonical distortion of the synthesized output AC voltage vector, at the expense of having to perform more switching and thus introducing more switching loss.

The processing circuitry 1010 may for example sample the reference vector $v_{ref}$ with sampling frequency $f_s$, and decide upon the various dwell times (and for which space vectors) that are required to match the reference vector during the current sampling interval. This may be, as explained earlier herein, done by explicitly calculating the respective dwell times, or e.g. by using a carrier signal and e.g. comparators and/or other circuit elements, and/or by using suitable software, thus deciding when and how to switch the various phases using the switching elements.

The processing circuitry 1010 is further configured to (e.g. as part of an operation S920 of the method 900) determine whether there is a demand for synthesizing a zero output AC voltage vector, i.e. whether the reference vector has zero magnitude during the current sampling interval. If this determination is affirmative, the processing circuitry 1010 introduces (e.g. as part of an operation S930 of the method 900) a delay between switching of each AC phase as has been described herein. The processing circuitry 1010 then proceeds to switch (e.g. as part of an operation S940 of the method 900) the switching elements in accordance with a switching sequence that includes the introduced delays. If there is no demand for outputting/synthesizing a zero AC voltage vector, and instead a demand for outputting/synthesizing a non-zero AC voltage vector, the processing circuitry 1010 may be configured to instead proceed directly to the switching step (e.g. operation S940) and use a switching sequence that does not include such delays, such as e.g. a switching sequence as partially shown in and described with reference to FIG. 5.

In some examples, the power converter 1020 may receive DC power from one or more storage elements 1030 (for storing of electrical energy), and be configured to convert such DC power into AC power that is delivered to an AC entity 1040, such as for example an EM (e.g. AC motor, such as 230). As envisaged herein, a storage element 1030 may for example be a supercapacitor, a battery pack (as formed from a plurality of battery cells), or any other element capable of storing electrical energy.

In some examples, the processing circuitry 1010 may be configured to receive (e.g. as part of an optional operation S904 of the method 900) a signal indicative of a desired or current speed $\omega$ (in e.g. revolutions per minute, rpm) of an AC motor, and to decide that there is a demand for outputting a zero output AC voltage vector in response to the indicated desired or current speed of the AC motor 1040 being below a speed threshold, e.g. if $\omega < \omega_{threshold}$. This may serve as an indication that the motor should be, or is, in "standby", and operation S920 may include to perform such a check as part of deciding whether to introduce the delay(s) or not.

In some examples, the processing circuitry 1010 may be configured to receive (e.g. as part of an optional operation S906 of the method 900) a signal indicative of one or more phase currents of the AC motor 1040, e.g. of one or more currents $i_u$, $i_v$ and/or $i_w$. The currents may be actual or requested currents, and the processing circuitry 1010 may be further configured to check whether one or more of these currents are below one or more corresponding current thresholds, e.g. if $i_{u/v/w} < i_{u/v/w,threshold}$. This may serve as an indication that the motor should be, or is, in "standby", and operation S920 may include to perform such a check as part of deciding whether to introduce the delay(s) or not.

In some examples, one or more signals 1050 provided to the computer system 1000 and processing circuitry 1010 may for example include one or both of the signals indicative of the desired/current motor speed and desired/current one or more phase currents, and similar.

In some examples, the computer system 1000 may form part of the power converter 1020. In other examples, the computer system 1000 and power converter 1020 may be provided as (at least logically) different entities. It is envisaged herein to also provide an electric power converter including the computer system 1000, such as e.g. the power converter 1020 in combination with the computer system 1000. The power converter 1020 may e.g. be as illustrated in and described with reference to any one of FIGS. 1, 2A, 2B and 3, or be any other suitable power converter for which there is a need to reduce CM current.

As envisaged herein, there is also provided a power supply system 1060 for e.g. an electric vehicle. The power supply system 1060 includes at least the one or more batteries 1030 (and/or e.g. one or more supercapacitors, or other examples of storage elements for storing of electrical energy), the power converter 1020 and the computer system 1000, and the power supply system 1060 may be configured to power the load 1040, e.g. an EM or similar, from the one or more batteries 1030.

It is to be noted that there may be some delay introduced between switching of each AC phase even if not utilizing the solution of the present disclosure, such as caused by e.g. noise and/or delays between when commanding a switch to switch and when it actually switches, e.g. as caused by communication bus delays, different length of cables, etc. However, within the solution of the present disclosure, the delay between switching of each AC phase is introduced on purpose, and in particular in response to a demand for outputting a zero AC voltage vector. The present disclosure thus proposes to introduce such delays for a very specific purpose and in a controlled way, and thus not rely on their being such delays available already from other sources and/or reasons.

**FIG. 11A** schematically illustrates an example electric vehicle 1100 as envisaged herein, including the computer system 1000 as part of the power supply system 1060. The power supply system 1060 powers one or more EMs of the vehicle 1100, where such one or more EMs are configured to propel the electric vehicle 1100. In this particular example, the vehicle 1100 is a heavy-duty electric vehicle in form of a cargo truck, but may of course be any type of electric vehicle in which such power supply system 1060 is required. In particular, the envisaged solution to reduce CM current may find use in any system wherein there are multiple sources and loads, and wherein CM currents may cause EMI that negatively affects the sources and loads as described herein.

**FIG. 11B** schematically illustrates an example energy storage system (ESS) 1101 that includes the computer system 1000 as part of the power supply system 1060. The ESS 1101 may for example be a battery bank for home usage (to be charged by locally produced solar power, and/or to be charged from an electrical grid and/or to deliver/sell power to such an electrical grid). The ESS 1101 may for example be part of an off grid-solution, an energy backup system, or similar. The ESS 1101 may for example be installed in a residence building or in an industry building, or similar, and/or be provided as part of a power station, switching station, or similar, and e.g. be used to maintain the frequency of the grid and/or in other ways stabilizing the grid. The exact configuration and use of the ESS 1101 is not important, and the ESS 1101 serves mainly to illustrate the solution and concepts of the present disclosure are applicable also in other areas than electric vehicles, i.e. in any area wherein CM current due to switching power converters is an issue. The ESS 1101 may for example include so-called "second use" or "second life" of batteries that have been removed from more critical applications such as vehicles, and instead used for e.g. home power storage or similar when their overall state-of-health (SoH) is no longer deemed sufficient for use in e.g. vehicles.

**FIG. 12** is a schematic diagram of a computer system 1200 for implementing examples disclosed herein. The computer system 1200 (which may be, form part of and/or include the computer system 1000) is adapted to execute instructions from a computer-readable medium to perform these and/or any of the functions or processing described herein. The computer system 1200 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1200 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1200 may comprise at least one computing device or electronic device capable of including firmware, hardware, and/or executing software instructions to implement the functionality described herein. The computer system 1200 may include processing circuitry 1202 (e.g., processing circuitry including one or more processor devices or control units), a memory 1204, and a system bus 1206. The computer system 1200 may include at least one computing device having the processing circuitry 1202. The system bus 1206 provides an interface for system components including, but not limited to, the memory 1204 and the processing circuitry 1202. The processing circuitry 1202 may include any number of hardware components for conducting data or signal processing or for executing computer code stored in memory 1204. The processing circuitry 1202 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1202 may further include computer executable code that controls operation of the programmable device.

The system bus 1206 may be any of several types of bus structures that may further interconnect to a memory bus (with or without a memory controller), a peripheral bus, and/or a local bus using any of a variety of bus architectures. The memory 1204 may be one or more devices for storing data and/or computer code for completing or facilitating methods described herein. The memory 1204 may include database components, object code components, script components, or other types of information structure for supporting the various activities herein. Any distributed or local memory device may be utilized with the systems and methods of this description. The memory 1204 may be communicably connected to the processing circuitry 1202 (e.g., via a circuit or any other wired, wireless, or network connection) and may include computer code for executing one or more processes described herein. The memory 1204 may include non-volatile memory 1208 (e.g., read-only memory (ROM), erasable programmable read-only memory (EPROM), electrically erasable programmable read-only memory (EEPROM), etc.), and volatile memory 1210 (e.g., random-access memory (RAM)), or any other medium which can be used to carry or store desired program code in the form of machine-executable instructions or data structures and which can be accessed by a computer or other machine with processing circuitry 1202. A basic input/output system (BIOS) 1212 may be stored in the non-volatile memory 1208 and can include the basic routines that help to transfer information between elements within the computer system 1200.

The computer system 1200 may further include or be coupled to a non-transitory computer-readable storage medium such as the storage device 1214, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1214 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1214 and/or in the volatile memory 1210, which may include an operating system 1216 and/or one or more program modules 1218. All or a portion of the examples disclosed herein may be implemented as a computer program 1220 stored on a transitory or non-transitory computer-usable or computer-readable storage medium (e.g., single medium or multiple media), such as the storage device 1214, which includes complex programming instructions (e.g., complex computer-readable program code) to cause the processing circuitry 1202 to carry out actions described herein. Thus, the computer-readable program code of the computer program 1220 can comprise software instructions for implementing the functionality of the examples described herein when executed by the processing circuitry 1202. In some examples, the storage device 1214 may be a computer program product (e.g., readable storage medium) storing the computer program 1220 thereon, where at least a portion of a computer program 1220 may be loadable (e.g., into a processor) for implementing the functionality of the examples described herein when executed by the processing circuitry 1202. The processing circuitry 1202 may serve as a controller or control system for the computer system 1200 that is to implement the functionality described herein.

The computer system 1200 may include an input device interface 1222 configured to receive input and selections to be communicated to the computer system 1200 when executing instructions, such as from a keyboard, mouse, touch-sensitive surface, etc. Such input devices may be connected to the processing circuitry 1202 through the input device interface 1222 coupled to the system bus 1206 but can be connected through other interfaces, such as a parallel port, an Institute of Electrical and Electronic Engineers (IEEE) 1394 serial port, a Universal Serial Bus (USB) port, an IR interface, and the like. The computer system 1200 may include an output device interface 1224 configured to forward output, such as to a display, a video display unit (e.g., a liquid crystal display (LCD) or a cathode ray tube (CRT)). The computer system 1200 may include a communications interface 1226 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

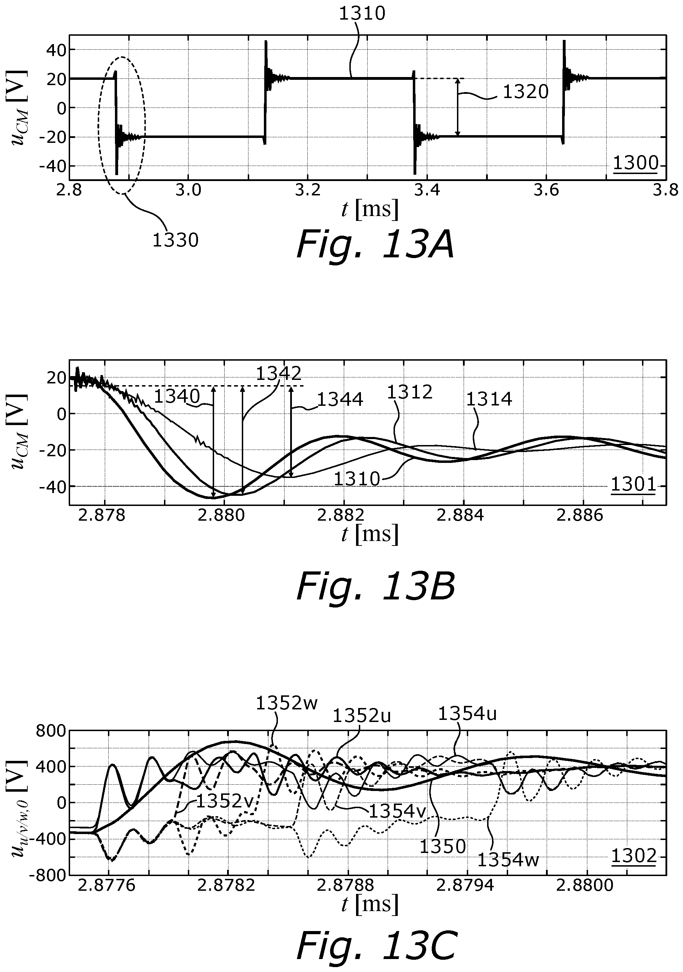

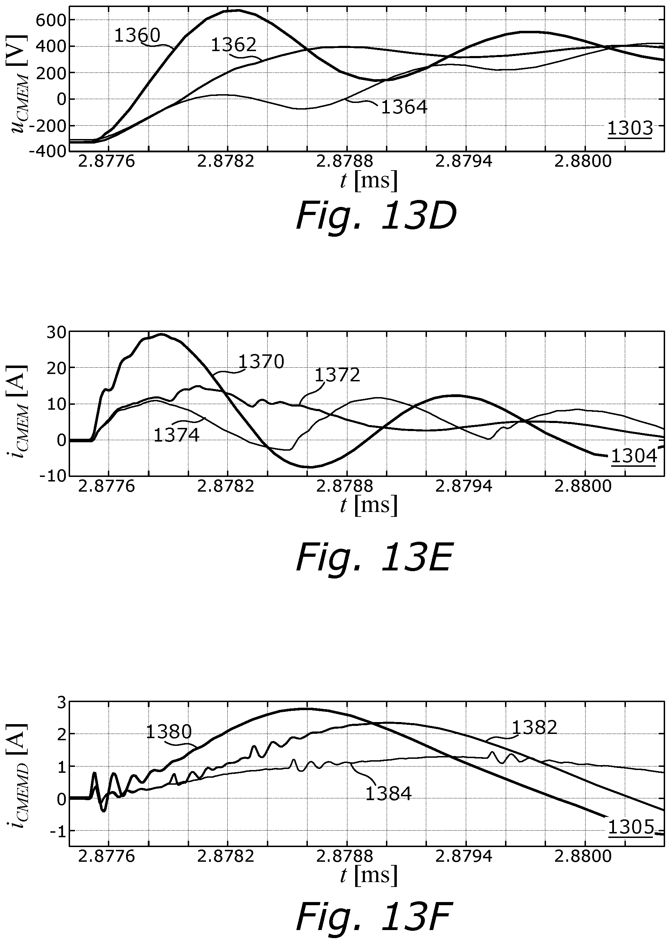

**FIGS. 13A, 13B, 13C, 13D, 13E** and **13F** schematically illustrate results of simulations performed to verify the plausibility of the proposed solution. In all of these figures, it is assumed that the configuration of the system 200/300 is such that $X_{EMD}$ = 2.72.

**FIG. 13A** shows a plot 1300 including a curve 1310 illustrating how the CM voltage $u_{CM}$ varies as a function of time when switching directly between the states (111) and (000). As can be seen, the CM voltage resembles a square wave with a plateau-to-plateau 1320 of just above 40 volts, wherein the peak-to-peak magnitude 1320 corresponds to the CM DC voltage $u_{CMDC}$.

**FIG. 13B** shows a plot 1301 of the CM voltage $u_{CM}$ in the region 1330 of FIG. 13A, i.e. on a shorter time-scale of fractions of a millisecond. Phrased differently, FIG. 13B shows the transient behavior of the voltage $u_{CM}$ after switching from one of the states (111) and (000) to the other. The plot 1301 include several curves 1310, 1312 and 1314, where curve 1310 is the same as in FIG. 13A, where curve 1312 is for the second scenario (with a delay of 0.4 $\mu s$ between switching of each phase), and where curve 1314 is for the third scenario (with a delay of 1 $\mu s$ between switching of each phase). As is clearly seen, in both the second and third scenario, the amplitude of the voltage $u_{CM}$ is reduced. In the first scenario, the maximum peak-to-peak difference 1340 is around 66 volts. In the second scenario, the difference 1342 is around 64 volts, and in the third scenario the difference 1344 is around 55 volts. Introducing of the delay is thus shown to reduce at least the transient amplitude of the CM voltage $u_{CM}$.

**FIG. 13C** is a plot of the EMD phase voltages, i.e. voltages $u_{u0}$, $u_{v0}$ and $u_{w0}$. Here, curve 1350 is the corresponding phase voltage without delay (i.e. as in the first scenario); curves 1352u, 1352v and 1352w are the phase voltages $u_{u0}$, $u_{v0}$ and $u_{w0}$, respectively, for a delay of 0.4 $\mu s$ (i.e. as in the second scenario), and curves 1354u, 1352v and 1352w are the same respective phase voltages for a delay of 1 $\mu s$ (i.e. as in the third scenario).

**FIG. 13D** is a plot of the three-phase (AC) CM voltage between the EM 230 and EMD 220, defined as $u_{CMEM} = (u_{u0} + u_{v0} + u_{w0})/3$. Here, curve 1360 is for scenario one, curve 1362 is for scenario two, and curve 1364 is for scenario three. As can be seen, introducing the envisaged delay between switching of each phase reduces the AC CM voltage.

**FIG. 13E** is a plot of the (AC) CM current between the EM 230 and EMD 220, denoted as $i_{CMEM}$. Here, curve 1370 is for the first scenario, the curve 1372 is for the second scenario, and curve 1374 is for the third scenario, and it can be seen that introducing the delay as envisaged herein helps to reduce the (transient) AC CM current between the EM 230 and EMD 220.

**FIG. 13F** is a plot of the (AC) CM current between the battery 210 and EMD 220, denoted as $i_{CMEMD}$. Here, curve 1380 is for the first scenario, curve 1382 is for the second scenario, and curve 1384 is for the third scenario, and it can be seen that introducing the delay as envisaged herein helps to reduce the (transient) CM current between the battery 210 and the EMD 220.

In summary of FIGS. 13A to 13F, it is thus concluded that the envisaged solution plausibly helps to reduce the effects of CM current and voltage. The three-phase (AC) CM voltage is seen to decrease with increased delay between switching of each phase (as seen in FIG. 13D). The three-phase (AC) CM current is seen to decrease with increased delay (as seen in FIG. 13E), and the CM current on the DC side is seen to decrease with increased delay (as seen in FIG. 13F).

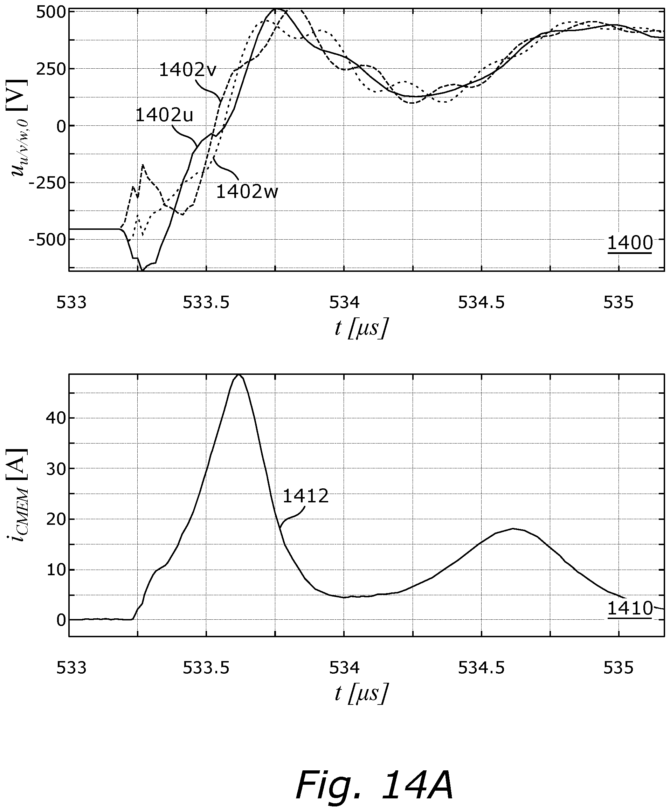

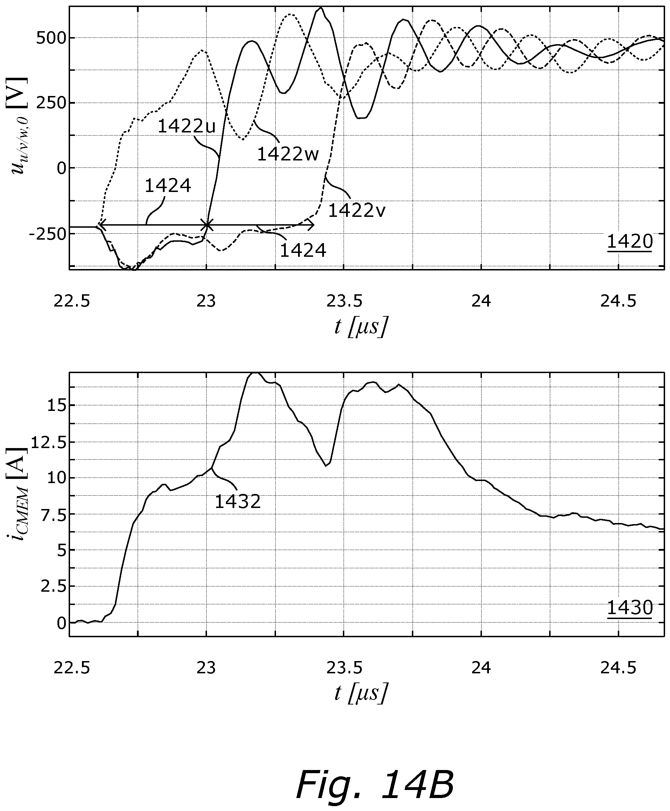

**FIGS. 14A** and **14B** further illustrates measurements performed in a real heavy-duty electric truck, illustrating how the delay between switching of each phase when transitioning between states (111) and (000) affects the CM current.

**FIG. 14A** includes a plot 1400 with curves 1402u, 1402v, 1402w of the various phase-to-ground voltages ($u_{u0}$, $u_{v0}$, $u_{w0}$), and a plot 1410 with a curve 1412 of the resulting CM current ($i_{CMEM}$), where all phases are switched (close to) simultaneously (although some delay is still present, caused by e.g. various disturbances and/or sources of noise in the system). As can be seen, the resulting CM current reaches an amplitude of around 49A.

**FIG. 14B** includes a plot 1420 with curves 1422u, 1422v, 1422w of the various phase-to-ground voltages ($u_{u0}$, $u_{v0}$, $u_{w0}$), and a plot 1430 with a curve 1432 of the resulting CM current ($i_{CMEM}$), wherein a larger delay 1424 of around 0.4 $\mu s$ is present between the switching of each phase. As can be seen, the amplitude of the resulting CM current is reduced to around 17A.

In summary of all of the above, it has thus been provided a solution in which CM current and voltage may by introducing a delay between switching of the phases when performing e.g. SVPWM, especially when there is a demand to synthesize a zero AC voltage vector. The effect is obtained without the need to introduce additional filters and without having to e.g. introduce changes to the various parasitic capacitances found in e.g. the battery, power converter and electric machine. The solution is thus retrofittable to already existing switching schemes, and may be implemented e.g. entirely in software without the need to perform hardware changes. The envisaged solution is particularly useful in heavy-duty/commercial electric vehicles, wherein there are multiple loads and sources connected to a same high-voltage DC bus, and where CM current and voltage and resulting EMI introduced by one such entity may otherwise negatively affect the others, resulting in e.g. a reduced performance and/or lifetime of one or more of these entities.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (1000, 1200) comprising processing circuitry (1010, 1202) configured to:

    - control a switching of a plurality of switching elements (320, 322, 324) of an electric power converter (120, 220, 1020) to synthesize an output alternating current, AC, voltage vector, wherein the power converter is configured to, by means of said switching and for each of a plurality of AC phases (330, 332, 334), switch the AC phase between being either connected to a first DC rail (310) or to a second DC rail (320), and
    - as part of said controlling and in response to a demand for synthesizing a zero output AC voltage vector, introduce an inter-phase delay ($d_i$; 1424) between switching of each AC phase to avoid simultaneous switching of all AC phases from the first DC rail to the second DC rail or vice versa during a same switching period.

2. The computer system of claim 1, wherein the processing circuitry is configured to control the switching of the switching elements using a space vector modulation, SVM, -type control scheme, and wherein introducing the delay to synthesize the zero output AC voltage vector includes switching from a first zero voltage vector ($V_0$, $V_7$) to a second zero voltage vector ($V_0$, $V_7$) via at least one intermediate active voltage vector ($V_1$, ... , $V_6$).

3. The computer system of claim 1 or 2, wherein the introduced delay between switching of each AC phase is obtained by randomly selecting an order in which each AC phase is switched.

4. The computer system of any one of claims 1 to 3, wherein the delay between switching of each AC phase is fixed.

5. The computer system of any one of the preceding claims, wherein the switching of each AC phase to introduce the delay is ordered to generate a zero average output AC voltage vector over a plurality of switching periods ($T_S$).

6. The computer system of any one of the preceding claims, wherein a total number of the AC phases is three.

7. The computer system of any one of the preceding claims, wherein the power converter is a two-level inverter.

8. The computer system of any one of the preceding claims, wherein the power converter is used to provide AC power to an AC motor (130, 230, 1040), and wherein the demand for synthesizing the zero AC output vector follows from a speed ($\omega$) of the AC motor being below a speed threshold ($\omega_{threshold}$),

9. The computer system of any one of the preceding claims, wherein the power converter is used to provide AC power to an AC motor, and wherein the demand for synthesizing the zero AC output vector follows from one or more phase currents ($i_u$, $i_v$, $i_w$) of the AC motor being below respective one or more current thresholds ($i_{u/v/w,threshold}$).

10. An electric power converter (220, 1020) for converting between direct current, DC, power and alternating current, AC, power, comprising:

   - a plurality of switching elements (320, 322, 324) for switching a plurality AC phases (330, 332, 334), wherein each AC phase is switchable, using the switching elements, between being either connected to a first DC rail (310) or to a second DC rail (320), and
   - the computer system (1000, 1200) according to any one of the preceding claims for controlling a switching of the switching elements to synthesize an AC output voltage vector.

11. An electric vehicle (1100), comprising:

   - at least one storage element (1030) for storing electrical energy;
   - at least one alternating current, AC, electric machine (1040) for propelling the vehicle, and
   - the electric power converter (1020) of claim 8 for powering the AC electric machine using the at least one storage element.

12. The vehicle of claim 11, wherein the vehicle is a heavy-duty electric vehicle or machine, or an electric marine vessel.

13. A computer-implemented method (900), comprising:

   - controlling, by processing circuitry (1010, 1202) of a computer system (1000, 1200), a switching of a plurality of switching elements (320, 322, 324) of an electric power converter (220, 1020) to synthesize an output alternating current, AC, voltage vector, wherein the power converter is configured to, by means of said switching and for each of a plurality of AC phases (330, 332, 334), switch the AC phase between being either connected to a first DC rail (310) or to a second DC rail (312), and
   - as part of said controlling and in response to a demand for synthesizing a zero output AC voltage vector, introducing, by the processing circuitry, an inter-phase delay ($d_i$; 1424) between switching of each AC phase to avoid simultaneous switching of all AC phases from the first DC rail to the second DC rail or vice versa during a same switching period.

14. A computer program product (1214) comprising program code (1220) for performing, when executed by processing circuitry (1010, 1202), the method (900) of claim 13.

15. A non-transitory computer-readable storage medium (1214) comprising instructions, which when executed by processing circuitry (1010, 1202), cause the processing circuitry to perform the method (900) of claim 14.

Fig. 1

Fig. 2A

*Fig. 2B*

*Fig. 3*

Fig. 4

Fig. 5

Fig. 6A

Fig. 6B

Fig. 7A

Fig. 7B

Fig. 7C

Fig. 7D

Fig. 8

Fig. 9

Fig. 10

Fig. 11A

Fig. 11B

Fig. 12

Fig. 13A

Fig. 13B

Fig. 13C

Fig. 13D

Fig. 13E

Fig. 13F

Fig. 14A

Fig. 14B

## EUROPEAN SEARCH REPORT

**Application Number**

EP 24 18 1161

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 353 597 A (XIAOMI AUTOMOBILE TECHNOLOGY CO LTD) 5 January 2024 (2024-01-05) * abstract; figures 1,4,5,10 * ----- | 1-15 | INV. H02M7/5387 H02M1/44 H02M1/12 |
| A | US 11 031 897 B1 (MEYER PETER K [US] ET AL) 8 June 2021 (2021-06-08) * column 12, line 47 - column 13, line 45; figures 1,3,8,9 * ----- | 1-15 | |

**TECHNICAL FIELDS SEARCHED (IPC)**

H02M

The present search report has been drawn up for all claims

| Place of search | Date of completion of the search | Examiner |
|---|---|---|
| The Hague | 18 November 2024 | Gusia, Sorin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 18 1161

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2024

| Patent document cited in search report | | Publication date | Patent family member(s) | | Publication date |
|---|---|---|---|---|---|
| CN 117353597 | A | 05-01-2024 | NONE | | |
| US 11031897 | B1 | 08-06-2021 | CN | 113258756 A | 13-08-2021 |
| | | | EP | 3855610 A1 | 28-07-2021 |
| | | | US | 11031897 B1 | 08-06-2021 |

EPO FORM P0459

For more details about this annex : see Official Journal of the European Patent Office, No. 12/82